# EUROPEAN PATENT APPLICATION

(11) **EP 0 558 877 A1**
(43) Date of publication of application: **08.09.1993**
(21) Application number: 92830100.1
(22) Date of filing: 03.03.1992
(51) Int. Cl.: B23Q 1/16, B23Q 1/14, B23Q 3/06, B23Q 1/28

(54) **A support and positioning device for the vertical broaching of bladed-rotor disks**

(71) Applicant: OFFICINE MECCANICHE VARINELLI S.p.A., I-20043 Arcore (Milano) (IT)
(72) Inventor: Varinelli, Antonio, I-20125 Milano (IT); Varinelli, Marco, I-20125 Milano (IT); Bianco, Oreste, I-10040 Caselette (Torino) (IT)
(74) Representative: Marchitelli, Mauro

(57) **Abstract**

A device (1) for supporting and positioning discs (D) for bladed rotors for vertical broaching has an indexing support (3) which is rotatable about a substantially vertical axis (W₃) and is carried by a support unit (4) including a swing-like cradle (12) which is supported pivotably on the base (2) of the device (1) and on which are disposed a oscillating cradle (25) and first and second linearly movable tables (41, 37) of which the second carries a reaction element (44) for the indexing support (3).

## Description

The present invention relates in general to vertical broaching machines.

More particularly, the invention relates to a device for supporting and positioning the discs for bladed rotors for vertical broaching, of the type comprising a substantially horizontal indexing support which is rotatable about a substantially vertical axis and carries a device for restraining the disc to be broached so that it is coaxial with the vertical axis and so that a peripheral portion to be broached projects beyond the indexing support, and a unit for supporting the indexing support on a base.

During the broaching of discs for bladed rotors, radial recesses for housing the roots of the rotor blades are formed in succession in the peripheral portion of the disc as a result of the stepped angular movement of the indexing support and the vertical movement of the broach. The recesses may have complex outlines with walls which are inclined to the axis of the disc and the unit which supports the indexing support must therefore be able to perform a series of movements, some linear and some angular, in order to present the region of the disc to be broached at the time in question in the predetermined position. The support unit must also have a system for supporting the indexing support near the region of the disc which is to be broached at any particular time, to provide the necessary reaction to the passage of the broach, as well as a system for clamping the support unit to the base in order to ensure the necessary rigidity during the broaching operation.

In a support and positioning device currently produced by the Applicant, the unit for supporting the indexing support comprises a first table which can reciprocate along a first substantially horizontal line, a second table which can move along a second substantially horizontal line perpendicular to the first, a first cradle which can oscillate about a first substantially horizontal axis which is parallel to the first substantially horizontal line and passes substantially through the centre of the disc to be broached which is carried by the indexing support by means of the restraining device, a second cradle which can oscillate about a second horizontal axis which is perpendicular to the first substantially horizontal axis and passes through the disc to be broached which is carried by the indexing support, and powered actuator means for moving the indexing support, the first and second tables and the first and second cradles in order to place the disc to be broached in the predetermined broaching positions and to clamp the disc rigidly in those positions during the broaching.

In this known device, the second table bears directly on the base and can move along the second horizontal line on horizontal guides on the base. The first cradle can oscillate on the second table and carries an upper guide on which the first table can slide along the first horizontal line. The second oscillating cradle is mounted on the first table and in turn carries the indexing support on its top. The disc to be broached is clamped to the indexing support in the successive broaching positions by means of an upper, clamping element and a lower, reaction element which are both movable towards and away from each other on opposite sides of the disc near the region thereof which is positioned below the broach at the time in question. The second horizontal axis about which the second cradle oscillates also passes substantially through the centre of the disc to be broached.

This arrangement has a series of disadvantages.

In the first place, the entire support unit has to be moved in order to achieve the translation along the second horizontal line by the movement of the second table. Since large masses are involved, a considerable amount of energy is required.

In the second place, the second table, the top of which houses the first cradle and the other components of the unit, is large and its upper sliding guide, along which the first cradle oscillates, has a large radius of curvature. This makes the support unit as a whole quite bulky which makes access to the broaching region difficult.

Moreover, the rigidity of the known support unit with the aforementioned arrangement of components is unsatisfactory and this adversely affects the precision of the positioning of the disc which is being broached. In particular, the oscillating coupling between the second cradle and the first table may be subject, in operation, to wear such as to create unacceptable play in the movement of the second cradle. This also applies to the sliding coupling between the second table and the base; any play in this coupling is detrimental to the rigidity of the entire support unit.

Moreover, the use of the movable reaction element below the indexing support complicates the broaching cycle, introducing idle times between each broaching stroke and the next due to the lowering and raising of the movable reaction element.

Finally, in the known embodiment, as stated, both of the axes about which the first cradle and the second cradle swing (the first substantially horizontal axis and the second horizontal axis) pass substantially through the centre of the disc to be broached which is carried by the indexing support. As a result, a turning moment is applied to the support unit during the broaching and, because of the limited rigidity of the unit and, in particular, of the second cradle carried by the first sliding table, this adversely affects the precision of the broaching.

The object of the present invention is to prevent the aforementioned problems and to provide a support and positioning device of the type defined at the beginning, in which the unit which supports the indexing support can ensure greater rigidity during the broaching of the discs and hence extremely precise operation.

According to the invention, this object is achieved by virtue of the fact that the second cradle is supported on the base in the manner of a swing by means of a pair of uprights which are fixed to the base and carry a pair of horizontal pivot pins which are aligned along the second horizontal axis, the axis passing substantially through the peripheral region of the disc which is carried by the indexing support and is being broached at the time in question, and in that the first cradle is supported in the second cradle, the second table is supported on the first cradle, the first table is supported on the second table and the indexing support is supported on the first table.

The entire support unit of the device can thus swing relative to the base, together with the second cradle. Conveniently, powered wedge-shaped clamping means are movable between the base and the second cradle in order to clamp the support unit rigidly during the broaching.

To advantage, a bridge-like clamping unit for clamping the disc to be broached against the indexing support is movable vertically above the indexing support and carried by the first cradle.

The bridge-like clamping unit cooperates with a reaction element which is fixed to the first table and on which the indexing support bears slidingly, vertically opposite the bridge clamping unit.

The powered actuator means for pivoting the second cradle conveniently include two units for rotating the pivot pins and pressurised-fluid-jack balancing means which act on the second cradle in a direction substantially parallel to the first horizontal axis.

According to another aspect of the invention, the indexing support is fixed removably to the first table and can be interchanged with indexing supports of different dimensions.

The arrangement according to the invention has many advantages in comparison with the prior art.

In the first place, the support unit is considerably simpler from a structural point of view and can ensure that the disc to be broached is positioned completely rigidly, so that considerably greater working precision can be achieved.

The movable masses which are moved along the second horizontal line are smaller, since the second table is mounted between the first table and the first cradle which in turn is supported on the second cradle, and this helps further to improve the rigidity of the support unit and consequently the precision of the broaching.

The pivoting movements of the second cradle are also more precise since it is suspended directly on the base in the manner of a swing, so that the risk of play is greatly reduced but complete rigidity is ensured in the condition in which it is clamped, relative to the base by the powered wedge means.

The position of the second horizontal axis, that is, the axis about which the second cradle swings, eliminates the application of turning moments to the support unit during broaching. This aspect further helps to improve the precision of the operation.

The arrangement of the bridge-like clamping unit carried by the first cradle and of the reaction element which is fixed to the first table reduces the adjustments necessary in order to change the type of discs, for bladed rotors, to be broached. Moreover, the reaction element, which is stationary on the first table, simplifies the broaching cycle, reducing the idle times for each successive stroke of the broach.

A further advantage resulting from the arrangement of the support unit according to the invention is that access to the broaching region is easier.

The invention will now be described in detail with reference to the appended drawings provided purely by way of non-limiting example, in which:

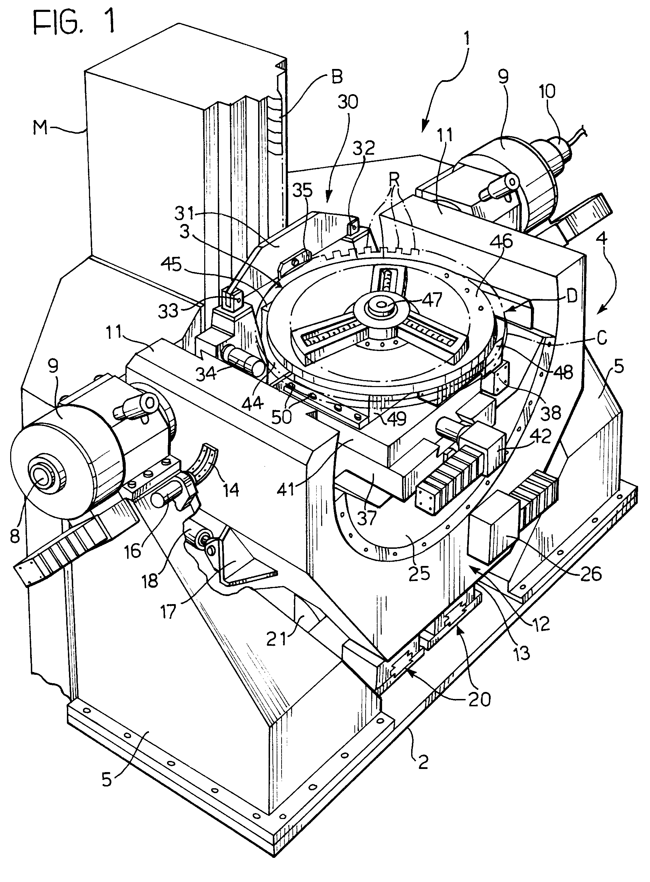

Figure 1 is a schematic, perspective view of a support and positioning device according to the invention,
Figure 2 is a vertical section taken on the line II-II of Figure 1,
Figure 3 is a transverse section taken on the line III-III of Figure 2,
Figure 4 shows the detail indicated by the arrow IV in Figure 3, on an enlarged scale,
Figure 5 is a simplified plan view taken on the arrow V of Figure 2, and

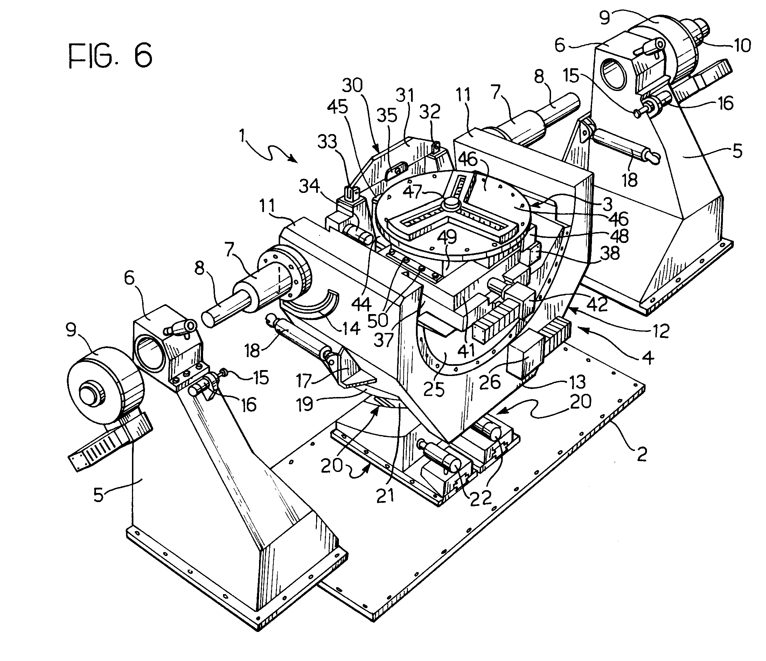

Figure 6 is a partially-exploded view of Figure 1.

With reference to the drawings, the structure of a vertical broaching machine of generally conventional type is generally indicated M and its vertically movable broach is schematically indicated B.

Facing the path of movement of the broach B is a support and positioning device, generally indicated 1, by means of which the pieces to be broached are positioned and clamped rigidly in the path of the broach from time to time, for broaching.

In particular, the device 1 is arranged to support and position discs D for bladed rotors, in peripheral regions C of which shaped radial recesses R are to be formed for housing the roots of the rotor blades. The radial recesses R are formed successively by the broach B in the disc D which in turn is mounted on the support and positioning device 1 in the manner which will become clear from the following.

The device 1 includes, essentially, a horizontal base 2, an indexing support 3 which is rotatable about a substantially vertical axis W₃ and on which a disc D is clamped from time to time so as to be coaxial with the axis W₃ with its peripheral region C projecting beyond the indexing support 3, and a support unit 4 for supporting the indexing support 3 on the base 2.

As will become clear from the following, the support unit 4 is arranged to move and position the indexing support 3, and hence the disc D carried thereby, relative to a plurality of linear and angular reference axes, most of which, including the axis of rotation W₃, are of variable orientation. The spatial positions of these axes will be described in the present description with reference to the configuration shown in the drawings and, in the claims which follow, will be described as "substantially" corresponding to those of the drawings, meaning that the geometrical positions of the axes may vary around those shown.

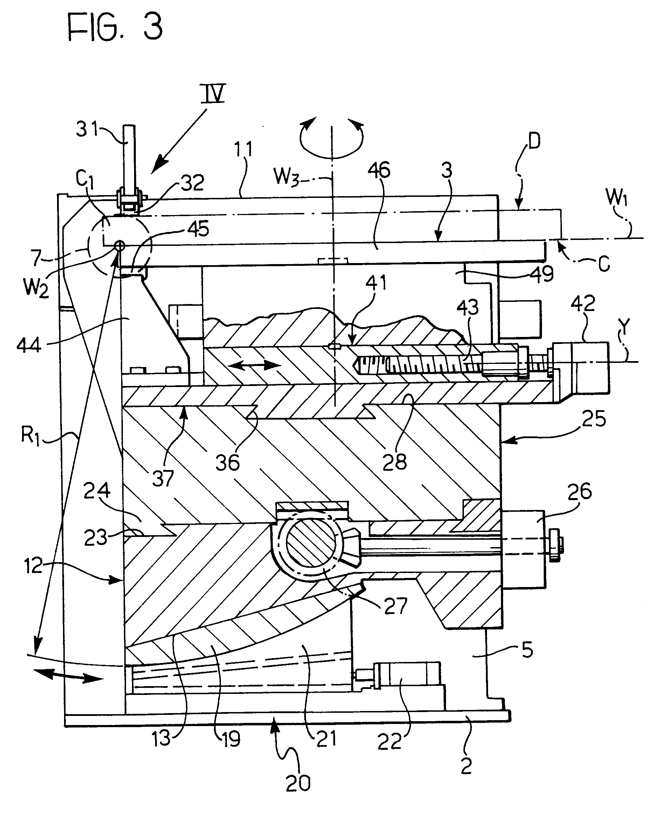

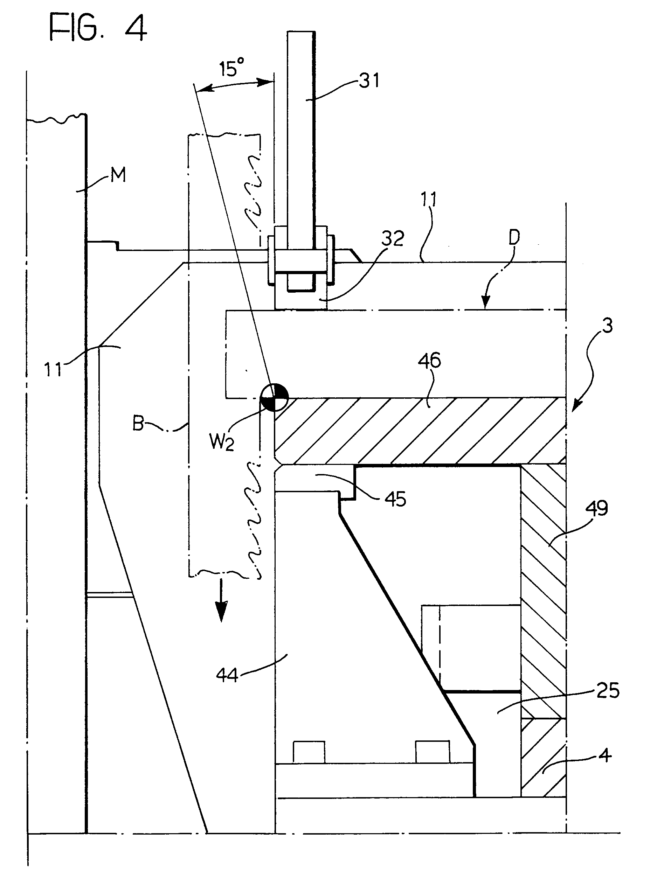

Two uprights 5 extend from the base 2 on opposite sides of the axis of rotation W₃, their ends carrying tubular supports 6 by means of which two pivot pins 7 are mounted for rotation, facing each other and aligned on a horizontal axis W₂. The axis W₂ is the only stationary axis of the unit and, as shown in greater detail in Figures 3 and 4, is offset towards the broach B from the axis of rotation W₃. The axis W₂ is actually substantially tangential to the peripheral region of the indexing support 3 which faces the path of movement of the broach B, that is, it passes through the broaching region of the peripheral annular portion C of the disc D which is mounted on the indexing support 3 at any particular time. This region is generally indicated C₁.

Each pin 7 is fixed to a respective shaft 8 which is rotated by a respective motor 9, for example, a hydraulic or electric motor, associated with an angular position transducer 10.

The two pins 7 are connected rigidly to the arms 11 of a pivoting cradle 12 which is suspended in the manner of a swing between the two uprights 5. The cradle 12 has a lower, outer, flat wall 13 facing the base 2 and, below the two pins 7, has two arcuate lateral guides 14 in which two positioning rods 15 associated with respective powered actuators 16, for example, pressurised-fluid actuators, carried by the uprights 5, are slidably engaged.

Immediately below the guides 14, the cradle 12 carries two fixing brackets 17 to each of which one end of a pressurised-fluid balancing actuator 18 is articulated, the opposite end of each actuator 18 being articulated to a respective attachment carried by one of the two uprights 5.

Two guides 19 with arcuate outer surfaces having a radius of curvature R₁ (Figure 3) are fitted on the flat lower surface 13 and cooperate with two powered clamping units 20, each of which is constituted by a wedge element 21 which is guided for sliding on the base 2 and is driven by an electric or pressurised-fluid actuator 22. The two wedges 21 are movable between retracted positions, in which they do not interfere with the respective guides 19, and extended positions, in which they are force-fitted against the guides 19, clamping the pivoting cradle 12 rigidly relative to the base 2.

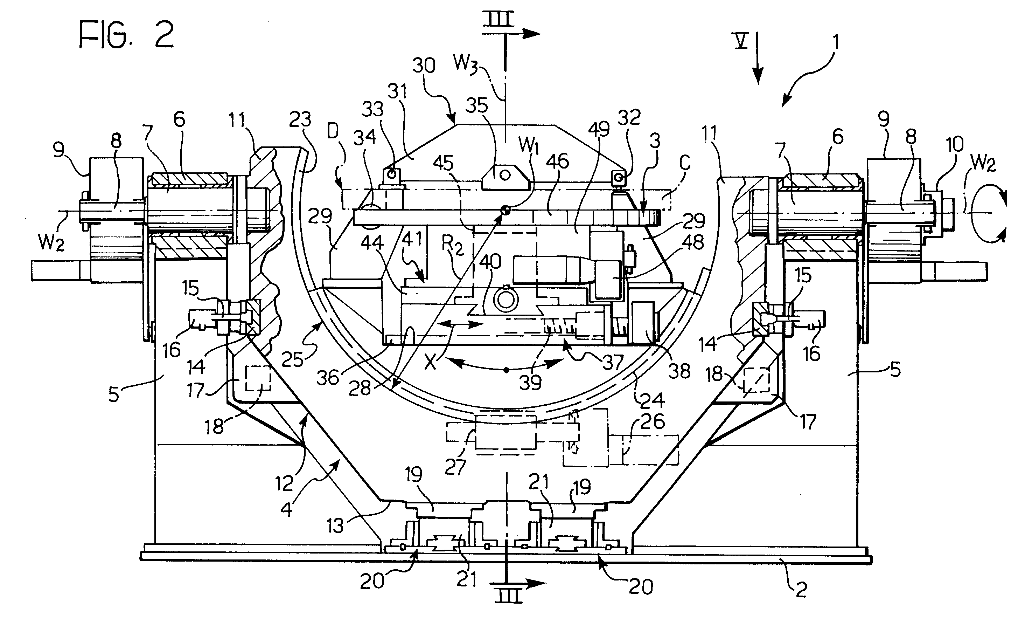

The pivoting cradle 12 has an upper arcuate profile 23 which has a radius of curvature R₂ (Figure 2) and defines a sliding guide 23 coupled slidably with the lower portion 24 of corresponding curvature of an oscillating cradle 25 which is supported by the swing-like cradle 12. The cradle 25 can oscillate about a horizontal axis W₁ which is perpendicular to the horizontal axis W₂ and intersects the axis of rotation W₃. The horizontal axis W₁ thus passes through the centre of rotation of the indexing support 3 and of the disc D to be broached, which is mounted thereon.

The oscillating cradle 25 is moved angularly relative to the swing-like cradle 12 about the axis W₁ by a powered actuator 26 which is fixed to the swing-like cradle 12, and a worm-screw and rack transmission, generally indicated 27 (Figure 3).

The side of the oscillating cradle 25 which faces away from the swing-like cradle 12 has a flat wall 28, opposite sides which have two substantially vertical uprights 29 carrying a bridge clamping unit 30 which is movable vertically above the peripheral region of the indexing support 3 which faces the broach B. The bridge-like clamping unit 30 includes a cross-member 31 one end of which is articulated to the top of one of the uprights 29 at 32 and the other end is connected at 33 to a powered actuator 34, for example, a pressurised-fluid actuator, by means of which the cross member 31 can pivot upwardly and downwardly about the articulation 32. The cross-member 31 carries a lower, central clamping element 35 for urging the disc D to be broached against the indexing support 3 from above in the region immediately adjacent the peripheral portion C₁ with which the broach B is interacting at the time in question.

The flat portion 28 of the oscillating cradle 25 has a guide 36 on which a movable table 37 is engaged for sliding along a first line X (Figure 2) parallel to the axis W₂. The table 37 is moved along the line X by a powered actuator 38 carried by the oscillating cradle 25 and a male-and-female screw transmission, schematically indicated 39.

The upper wall of the movable table 37 has a flat guide 40 on which a reciprocating table 41 is slidably engaged. The table 41 is movable to and fro along a second horizontal line Y perpendicular to the line X of movement of the table 37, by means of an actuator 42 carried by the movable table 37 and a male-and-female screw transmission 43 (Figure 3).

A reaction element 44 which is fixed rigidly to the region of the movable table 37 which faces the broach B, is adapted to be positioned vertically opposite the clamping element 35 of the bridge unit 30 and carries on its top a guide 45 on which the region of the indexing support 3 which faces the broach B at the time in question, that is, the region situated beneath the peripheral region C₁ of the disc D to be broached at the time in question, bears slidingly.

The indexing support is constituted by a substantially horizontal, circular plate 46 with a diameter smaller than that of the disc D to be broached and carries a self-centering clamping device 47 of conventional type, for clamping the hub of the disc D so that it is coaxial with the axis of rotation W₃.

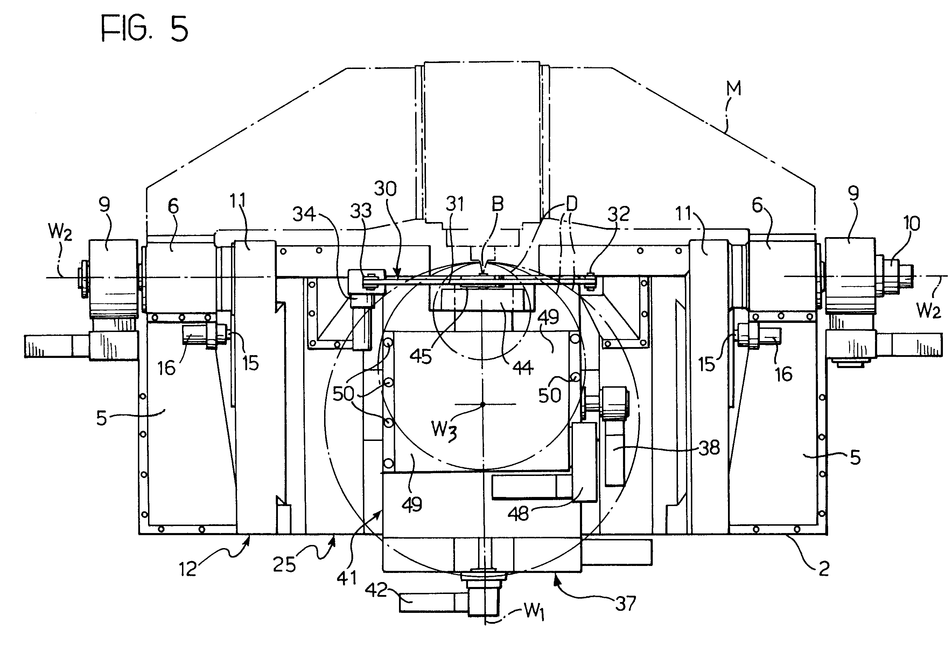

The plate 46 is mounted for rotation by means of a powered actuator 48, on a body 49 which is fixed to the reciprocating table 41 in a quickly removable manner, for example, by screws 50. This enables the indexing support to be removed easily and quickly for replacement by similar indexing supports with plates 46 of larger or smaller dimensions for working on discs D of larger or smaller diameters, respectively, as shown schematically by broken lines in Figure 5 (in which the plate 46 has been omitted to simplify the drawings).

All the powered actuators described above (9, 16, 18, 22, 26, 33, 38, 42, 48) are connected to an electronic control circuit which is supplied with signals from the angular transducers 10 and from further position transducers (which are not shown but are within the capabilities of an expert in the art) which may be associated with the other movable components of the device 1, in order to control the positioning of the indexing support 3 in synchronism with the movement of the broach B.

The device 1 operates as follows.

After the indexing support 3, which has been selected in accordance with the dimensions of the disc D to be broached, has been fixed to the reciprocating table 41, the disc D is clamped to the plate 46 by the self-centering device 47 so as to be coaxial with the axis of rotation W₃. As stated, in the mounted condition, the annular peripheral portion C of the disc D to be broached projects beyond the peripheral edge of the plate 46.

The region C₁ of the disc D to be broached at any particular time is then placed in the preselected position, relative to the path of movement of the broach B, by the various movements of the components of the support unit 4, as follows.

The swing-like cradle 12 is oriented about the horizontal axis W₂ by the rotation of the pins 7 by means of the motors 9 and by the simultaneous action of the balancing jacks 18. During this stage, the rods 15, operated by the actuators 16 and the wedges 21 operated by the actuators 22 are kept in their inoperative positions so that the cradle 12 is free to move angularly.

As soon as the desired angular position, detected by the transducers 10, is reached, the rods 15 are retracted and the wedges 21 are advanced so as to clamp the cradle 12 rigidly relative to the base 2 in the position established.

The orientation about the axis W₁ and the positioning along the line X are determined respectively by the angular movement of the cradle 25 by means of the actuator 26, and by the translation of the table 37 by means of the actuator 38.

The disc D is positioned angularly about the axis W₃ by the angular movement of the indexing support 3 by means of the actuator 48.

At this point, the region C₁ of the disc D to be broached is positioned in the path of movement of the broach B by the advance of the table 41 along the line Y, by means of the actuator 42. The disc D is then clamped against the plate 46 near the region C₁ as a result of the lowering of the bridge clamping unit 30, by means of the actuator 34. The opposite side of the plate 46 bears against the guide 45 on the reaction element 44.

At this point, the broach B performs its vertical downward stroke, by means of which the recess R is formed in the region C₁ of the disc D.

At the end of this stage, the actuator 34 raises the bridge clamping unit 30 and the actuator 42 retracts the table 41 and the indexing support 3 to enable the broach B to perform its upward return stroke. The cycle is repeated in a similar manner in order to broach an adjacent region C₁, until the ring of recesses R in the peripheral region C of the disc D is complete.

The advantages resulting from the configuration of the device 1 according to the invention may be summarised as follows, with reference to the conformation and arrangement of its essential components:
- the reciprocating table 41: the mass to be moved to and fro along the line Y for each successive broaching stroke is reduced; moreover, different indexing supports 3 can be fitted and removed quickly and even discs for rotors D of considerable diameters can be broached;
- the movable table 37: since only the reciprocating table 41 and the indexing support 3 have to be moved, this is particularly compact, strong and accurate; the reaction element 44 fixed rigidly thereto performs no independent movements, reducing the dead times during broaching;
- the oscillating cradle 25: the radius R₂ is small so the cradle 25 is particularly compact, rigid and accurate as well as easily accessible;
- the swing-like cradle 12: the fact that it is suspended pivotably on the pins 7 facilitates its movement and the control of its angular position; its suspension directly on the base 2 by means of the uprights 5 ensures maximum rigidity in the condition in which it is clamped by the wedge units 20; moreover, the position of its pivoting axis W₂, which passes substantially through the disc D in the region C₁ which is to be broached in at any particular time, prevents turning moments due to the broaching.

Naturally, the details of construction and forms of embodiment may be varied widely with respect to those described and illustrated, without thereby departing from the scope of the present invention, as defined in the following claims.

## Claims

1. A device (1) for supporting and positioning discs (D) for blade rotors for vertical broaching, comprises a substantially horizontal indexing support (3) which is rotatable about a substantially vertical axis (W₃) and carries means (47) for restraining the disc (D) to be broached so that it is coaxial with the vertical axis (W₃) and so that an annular peripheral portion (C) to be broached projecting beyond the indexing support (3), and a unit (4) for supporting the indexing support (3), including a base (2) carrying:
- a first table (41) which can reciprocate along a first substantially horizontal line Y,
- a second table (37) which can move along a second substantially horizontal line (X) perpendicular to the first (Y),
- a first cradle (25) which can oscillate about a first substantially horizontal axis (W₁) which is parallel to the first substantially horizontal line (Y) and passes substantially through the centre of the disc (D) to be broached which is carried by the indexing support (3), by means of the restraining device (47),
- a second cradle (12) which can oscillate about a second horizontal axis (W₂) which is perpendicular to the first substantially horizontal axis (W₁) and passes through the disc (D) to be broached which is carried by the indexing support (3), by means of the restraining device (47), and
- powered actuator means (9, 26, 42, 48) for moving the indexing support (3), the first and second tables (41, 37) and the first and second cradles (25, 12), in order to place the disc (D) to be broached in the predetermined broaching positions and to clamp the disc (D) to be broached rigidly in those positions during the broaching,
characterised in that:
- the second cradle (12) is supported on the base (2) in the manner of a swing by means of a pair of uprights (5) which are fixed to the base (2) and carry a pair of horizontal pivot pins (7) which are aligned along the second horizontal axis (W₂), the axis (W₂) passing substantially through the peripheral region (C₁) of the disc (D) which is carried by the indexing support (3) and is being broached at the time in question, and in that:
- the first cradle (25) is supported in the second cradle (12),
- the second table (37) is supported on the first cradle (25),
- the first table (41) is supported on the second table (37), and
- the indexing support (3) is carried on the first table (41).

2. A device according to Claim 1, characterised in that powered, movable-wedge clamping means (20) are interposed between the base (2) and the second cradle (12) in order to clamp the support unit (4) rigidly relative to the base (2).

3. A device according to Claim 1, characterised in that the first cradle (25) carries a bridge-like clamping unit (30) which is movable vertically above the indexing support (3) for clamping the disc (D) to be broached against the indexing support (3) near the peripheral region (C₁) to be broached.

4. A device according to Claim 3, characterised in that a reaction element (44) is fixed to the second table (37), the indexing support (3) bearing slidingly on the reaction element (44) vertically opposite the bridge clamping unit (30).

5. A device according to Claim 1 or Claim 2, characterised in that the powered actuator means for pivoting the second cradle (12) include two drive units (9) for rotating the articulation pins (7) and pressurised-fluid-jack balancing means (18) which act on the second cradle (12) along a line substantially parallel to the first horizontal axis (W₁).

6. A device according to Claim 1, characterised in that the indexing support (3) is fixed removably to the first table (41) and can be interchanged with indexing supports of different dimensions.
